# EUROPEAN PATENT SPECIFICATION

(11) **EP 2 949 151 B1**
(45) Date of publication and mention of the grant of the patent: **08.06.2016**
(21) Application number: 14704716.1
(22) Date of filing: 21.01.2014
(51) Int. Cl.: H04W 36/22

(54) **APPARATUS AND METHOD OF NETWORK SELECTION BASED ON AVAILABLE BANDWIDTH**
VORRICHTUNG UND VERFAHREN ZUR NETZWERKAUSWAHL AUF GRUNDLAGE EINER VERFÜGBAREN BANDBREITE
APPAREIL ET PROCÉDÉ DE SÉLECTION DE RÉSEAU EN FONCTION DE LA BANDE PASSANTE DISPONIBLE

(30) Priority: 25.01.2013 US 201361757054 P; 15.03.2013 US 201313842267
(43) Date of publication of application: 02.12.2015
(73) Proprietor: QUALCOMM INCORPORATED, San Diego, California 92121-1714 (US)
(72) Inventor: MEYLAN, Arnaud, San Diego, California 92121-1714 (US); HORN, Gavin, Bernard, San Diego, California 92121-1714 (US); FACCIN, Stefano, San Diego, California 92121-1714 (US)
(74) Representative: Wegner, Hans
(86) International application number: PCT/US2014/012270
(87) International publication number: WO 2014/116565

(56) References cited:
- EP-A1- 2 603 046
- US-A1- 2012 120 824
- US-A1- 2012 196 644
- QUOC-THINH NGUYEN-VUONG ET AL: "Terminal-Controlled Mobility Management in Heterogeneous Wireless Networks", IEEE COMMUNICATIONS MAGAZINE, IEEE SERVICE CENTER, PISCATAWAY, US, vol. 45, no. 4, 1 April 2007 (2007-04-01), pages 122-129, XP011176569, ISSN: 0163-6804
- RBARA ORLANDI AND FRANK SCAHILL: "Improving QoE in Heterogeneous Networks", INTERNET CITATION, 17 September 2012 (2012-09-17), pages 1-6, XP002718285, Retrieved from the Internet: URL:http://www2.alcatel-lucent.com/techzin e/improving-qoe-in-heterogeneous-networks/ [retrieved on 2014-01-02]
- "Cellular-Wi-Fi Integration Cellular-Wi-Fi White Paper", , 30 June 2012 (2012-06-30), XP055097153, Retrieved from the Internet: URL:http://www.interdigital.com/wp-content /uploads/2012/08/Cellular_WiFi_Integration -White-Paper.pdf [retrieved on 2014-01-20]

## Description

The present Application for Patent claims priority benefit of co-pending 13/842,267 by Chen et al., entitled "Apparatus and Method of Network Selection Based on Available Bandwidth," filed March 15, 2013, and assigned to the assignee hereof; and claims priority benefit of U.S. Provisional Patent Application No. 61/757,054 by Meylan et al., entitled "Apparatus and Method of Network Selection Based on Available Bandwidth," filed January 25, 2013, and assigned to the assignee hereof.

### BACKGROUND

Aspects of the present disclosure relate generally to wireless communication systems, and more particularly, to network selection based on a selectively applied network access policy.

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks. Other examples of such multiple-access systems include time-division multiple access (TDMA) systems, frequency-division multiple access (FDMA) systems, and orthogonal frequency-division multiple access (OFDMA) systems.

In certain situations, it may be desirable for a radio access network (RAN) node, such as a cellular or Wireless Wide Area Network (WWAN) base station or nodeB, to offload traffic to another radio access technology (RAT) access node, such as a WiFi or Wireless Local Area Network (WLAN) access point, capable of supporting the traffic. Existing solutions include a network access stratum (NAS)-based function, referred to as an access network domain selection function (ANDSF) that defines one or more RAT preferences based on static rules for network selection. Other existing solutions include upper layer/operating system (OS)-based functions that define one or more RAT preferences based on static rules for network selection.

Document US 2012/0196644 A1 relates to a method and system for selecting a network to establish a connection to from a set of available networks. These include a network database providing historical information about each of the networks and sends the database information to end user terminals. The end user terminals monitor real-time performance information about each of the available networks and can send this information to the network database. The end user terminals also include network connection policy information which can be used to make the selection decision. The end user terminal determines a network quality score for each available network as a function of the historical information from the network database, the real-time performance information about each available network and the network connection policy information. The end user terminal can select the available network as a function of the network quality score, for example, selecting the available network with the highest network quality score.

Document US 2012/0120824 A1 relates to apparatus and methods that provide wireless communications, where a method for wireless communications includes determining network performance and sharing NPI with a network node, wherein the NPI comprises information necessary for the network node to determine the performance available on a network.

Document "Terminal-Controlled Mobility Management in Heterogeneous Wireless Networks" (Quoc-Thinh Ngyuen-Vuong et al., IEEE Communications Magazine, vol. 45, no. 4, pages 122-129) relates to Terminal-Controlled Mobility Management in Heterogeneous Wireless Networks. It discloses that the coexistence of multiple access technologies deployed by different operators is fundamental for future fourth-generation mobile networks. A seamless mobility management approach is presented that does not require changes to existing network infrastructure. The mobility management is fully controlled by the terminal. Network selection is user-centric, power-saving, cost-aware, and performance-aware. Total mobility management, including interface management, handover decision, and execution, are also detailed.

Document "Improving QoE in Heterogeneous Networks" (Alcatel-Lucent TechZine - Alcatel-Lucent's Technology and Business eZine) relates to heterogeneous network policies, the Access Network Discovery and Selection Function (ANDSF) and Hotspot 2.0 for delivering better quality of experience (QoE) in complex mobile multioperator environments.

White Paper "InterDigital, Cellular-Wi-Fi-Integration, A comprehensive analysis of the technology and standardization roadmap" discloses that Cellular and Wi-Fi radio technologies originated from two fundamentally different objectives and that over time, each has trended towards the other, with wireless data a central use of cellular technology today while over-the-top services provide voice over data networks. This confluence seems headed towards a fundamentally integrated cellular and Wi-Fi landscape.

### SUMMARY

The invention is defined in the independent claims.

The describes features generally relate to one or more improved systems, methods, and/or apparatuses for network selection by a mobile device that enables a network selection based, at least in part, on a network access policy that indicates use of a radio access technology (RAT) based on one or more network characteristics. The network access policy may be selectively applied based on one or more predetermined conditions, such as a time of day, mobile device location, RAT access cost, roaming status, subscription profile, and/or data usage, for example, In some examples, when the network access policy is applied, the mobile device may be configured to select from among a number of access nodes that may operate using different RATs, such as cellular access node(s) or Wireless Local Area Network (WLAN) access node(s), for example. Communications may be established with a selected access node based at least in part on network conditions such as available bandwidth for an access node.

In one aspect, a method of managing network selection at a mobile device is described. The method generally includes determining that more than one radio access technology (RAT) is available for wireless communication with the mobile device, accessing a network access policy that indicates use of a RAT based on one or more network characteristics, selectively applying the network access policy based on one or more predetermined criteria, determining one or more parameters for each of the more than one RAT based on the network access policy, and establishing communication with the RAT based on the one or more parameters and the network access policy.

In some embodiments, the determining the one or more parameters may include estimating an available bandwidth for one or more RAT and identifying the RAT having the highest estimated available bandwidth. Estimating the available bandwidth may include, for example, one or more of estimating an available radio link bandwidth or determining a backhaul bandwidth. Determining the backhaul bandwidth may include, for example, one or more of receiving the backhaul bandwidth in a message from another node or estimating the backhaul bandwidth. In some embodiments, estimating the available bandwidth may include measuring a link capacity at the mobile device and receiving or estimating parameters related to a network load. In some embodiments, the selection condition includes a hysteresis value to bias against selecting a new RAT.

In some embodiments, the one or more predetermined criteria may include, for example, one or more of: a current time of day; a current location of the mobile device; a cost of accessing one of the more than one RAT; a roaming status of the mobile device on one or more RAT; a subscription profile of the mobile device; a current data usage of the mobile device; or an identity of a WLAN or cellular access node.

In some embodiments, the network access policy may include a first bandwidth-related parameter threshold for a first RAT and a second bandwidth-related parameter threshold for a second RAT. The method may further include, in some embodiments, determining a first bandwidth-related parameter of the first RAT meets the first bandwidth-related parameter threshold, determining a second bandwidth-related parameter of the second RAT fails to meet the second bandwidth-related parameter threshold, and establishing communication with the first RAT. In other embodiments, estimating the available bandwidth may include estimating as a function of one or more bandwidth-indicating parameters. The one or more bandwidth-indicating parameters may include, for example, one or more of a signal-to-noise ratio (SNR), a resource utilization, an noise rise, a RAT load, a number of codes available, a slot utilization factor, a transmit power available, a number of resource blocks available, or a capacity and utilization of access node backhaul. In other embodiments, the estimating as the function of one or more bandwidth-indicating parameters may further include estimating a quality of a radio link and link capacity, estimating a fraction of system resources available to the mobile device, and scaling the link capacity with the fraction of system resources available to the mobile device to generate the available radio link bandwidth for each RAT.

In some embodiments, the network access policy may also include a selection condition, and establishing communication with the RAT may be based on the selection condition. Such a selection condition may include, for example, a first RAT selection condition for selecting the RAT having the highest estimated available bandwidth and a second RAT selection condition for selecting a second RAT. In some embodiments, the mobile device may determine the first RAT selection condition is met and establish communication with the RAT based on the first RAT selection condition being met. Additionally or alternatively, the mobile device may determine the second RAT selection condition is met and establish communication with the second RAT based on the second RAT selection condition being met. The first RAT selection condition may include, for example, a first bandwidth-related parameter threshold and the second RAT selection condition may include, for example, a second bandwidth-related parameter threshold. The mobile device may further, in some embodiments, determine the first bandwidth-related parameter of one of the RATs meets the first bandwidth-related parameter threshold thereby achieving the first RAT condition, and determine the second bandwidth-related parameter of the second RAT does not meet the second bandwidth-related parameter threshold thereby not achieving the second RAT condition.

In another aspect, a computer program product for managing network selection at a mobile device is described. The computer program product generally includes a computer-readable medium, comprising code for determining that more than one radio access technology (RAT) is available for wireless communication with the mobile device, accessing a network access policy that indicates use of a RAT based on one or more network characteristics, selectively applying the network access policy based on one or more predetermined criteria, determining one or more parameters for each of the more than one RAT based on the network access policy, and establishing communication with the RAT based on the one or more parameters and the network access policy.

In some embodiments, the code for determining the one or more parameters includes code for estimating an available bandwidth for one or more RAT and identifying the RAT having the highest estimated available bandwidth. The code for estimating the available bandwidth, in some embodiments, may include code for estimating an available radio link bandwidth or code for determining a backhaul bandwidth. The code for determining the backhaul bandwidth may include, for example, code for receiving the backhaul bandwidth in a message from another node or code for estimating the backhaul bandwidth. The code for estimating the available bandwidth, in some embodiments, may include code for measuring a link capacity at the mobile device and receiving or estimating parameters related to a network load. In some embodiments, the computer program product further includes code for determining a first bandwidth-related parameter of the first RAT meets the first bandwidth-related parameter threshold, determining a second bandwidth-related parameter of the second RAT fails to meet the second bandwidth-related parameter threshold, and establishing communication with the first RAT.

In some embodiments, the one or more predetermined criteria may include, for example, one or more of: a current time of day; a current location of the mobile device; a cost of accessing one of the more than one RAT; a roaming status of the mobile device on one or more RAT; a subscription profile of the mobile device; a current data usage of the mobile device, or an identity of a WLAN or cellular access node.

In another aspect, an apparatus for managing network selection at a mobile device is described. The apparatus generally includes means for determining that more than one radio access technology (RAT) is available for wireless communication with the mobile device, means for accessing a network access policy that indicates use of a RAT based on one or more network characteristics, means for selectively applying the network access policy based on one or more predetermined criteria, means for determining one or more parameters for each of the more than one RAT based on the network access policy, and means for establishing communication with the RAT based on the one or more parameters and the network access policy.

In some embodiments, the means for determining the one or more parameters may include means for estimating an available bandwidth for one or more RAT, and means for identifying the RAT having the highest estimated available bandwidth. The means for estimating the available bandwidth may include, for example, means for estimating an available radio link bandwidth or means for determining a backhaul bandwidth. The means for determining the backhaul bandwidth may include, for example, means for receiving the backhaul bandwidth in a message from another node or means for estimating the backhaul bandwidth. In some embodiments, the means for estimating the available bandwidth may include means for measuring a link capacity at the mobile device and receiving or estimating parameters related to a network load. In some embodiments, the selection condition includes a hysteresis value to bias against selecting a new RAT.

In some embodiments, the one or more predetermined criteria may include, for example, one or more of: a current time of day; a current location of the mobile device; a cost of accessing one of the more than one RAT; a roaming status of the mobile device on one or more RAT; a subscription profile of the mobile device; a current data usage of the mobile device; or an identity of a WLAN or cellular access node.

In some embodiments, the apparatus may also include means for determining a first bandwidth-related parameter of the first RAT meets the first bandwidth-related parameter threshold, means for determining a second bandwidth-related parameter of the second RAT fails to meet the second bandwidth-related parameter threshold, and means for establishing communication with the first RAT. The means for estimating the available bandwidth for each RAT, in some embodiments, may include means for estimating as a function of one or more bandwidth-indicating parameters. The one or more bandwidth-indicating parameters may include one or more of a signal-to-noise ratio (SNR), a resource utilization, an noise rise, a RAT load, a number of codes available, a slot utilization factor, a transmit power available, a number of resource blocks available, or a capacity and utilization of access node backhaul, for example. The means for estimating as the function of one or more bandwidth-indicating parameters may include, for example, means for estimating a quality of a radio link and link capacity, means for estimating a fraction of system resources available to the mobile device, and means for scaling the link capacity with the fraction of system resources available to the mobile device to generate the available bandwidth for each RAT.

In some embodiments, the network access policy may include a selection condition, and establishing communication with the RAT having the highest estimated available radio link bandwidth may be based on the selection condition. The selection condition may include, for example, a first RAT selection condition for selecting the RAT having the highest estimated available bandwidth and a second RAT selection condition for selecting a second RAT. The apparatus may further include, in some embodiments, means for determining the first RAT selection condition is met, and the means for establishing communication with the RAT having the highest estimated available bandwidth may be further based on the first RAT selection condition being met. The apparatus may further include, in some embodiments, means for determining the second RAT selection condition is met, and means for establishing communication with the second RAT based on the second RAT selection condition being met. The first RAT selection condition may include, for example, a first bandwidth-related parameter threshold, and the second RAT selection condition may include a second bandwidth-related parameter threshold. The apparatus may further comprise, in some embodiments, means for determining the first bandwidth-related parameter of one of the RATs meets the first bandwidth-related parameter threshold thereby achieving the first RAT condition, and means for determining the second bandwidth-related parameter of the second RAT does not meet the second bandwidth-related parameter threshold thereby not achieving the second RAT condition.

In another aspect, a device for managing network selection is provided. The device generally includes a processor and a memory in electronic communication with the processor. The memory, according to some embodiments, embodies instructions, the instructions being executable by the processor to determine that more than one radio access technology (RAT) is available for wireless communication with the mobile device, access a network access policy that indicates use of a RAT based on one or more network characteristics, selectively apply the network access policy based on one or more predetermined criteria, determine one or more parameters for each of the more than one RAT based on the network access policy, and establish communication with the RAT based on the one or more parameters and the network access policy.

In some embodiments, the instructions may be further executable by the processor to estimate an available bandwidth for one or more RAT, and identify the RAT having the highest estimated available bandwidth. The instructions may be further executable by the processor to estimate the available bandwidth through at least one of estimating an available radio link bandwidth or determining a backhaul bandwidth. In some embodiments, the instructions may be further executable by the processor to determine the backhaul bandwidth through at least one receipt of the backhaul bandwidth in a message from another node or estimating the backhaul bandwidth. In other embodiments, the instructions may be further executable by the processor to measure a link capacity at the mobile device and receive or estimate parameters related to a network load. In some embodiments, the network access policy includes a first bandwidth-related parameter threshold for a first RAT and a second bandwidth-related parameter threshold for a second RAT. The instructions may be further executable by the processor to, for example, determine a first bandwidth-related parameter of the first RAT meets the first bandwidth-related parameter threshold, determine a second bandwidth-related parameter of the second RAT fails to meet the second bandwidth-related parameter threshold, and establish communication with the first RAT.

In some embodiments, the one or more predetermined criteria comprise one or more of: a current time of day; a current location of the mobile device; a cost of accessing one of the more than one RAT; a roaming status of the mobile device on one or more RAT; a subscription profile of the mobile device; a current data usage of the mobile device; or an identity of a WLAN or cellular access node.

Further scope of the applicability of the described methods and apparatuses will become apparent from the following detailed description, claims, and drawings. The detailed description and specific examples are given by way of illustration only, since various changes and modifications within the spirit and scope of the description will become apparent to those skilled in the art.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The disclosed aspects will hereinafter be described in conjunction with the appended drawings, provided to illustrate and not to limit the disclosed aspects, wherein like designations denote like elements, and in which:
Fig. 1 shows a block diagram of a wireless communications system;
Fig. 2 shows another block diagram of a wireless communications system;
Fig. 3 shows an example of a wireless communications system and block diagram of an example of a mobile device in accordance with various embodiments;
Fig 4 shows a block diagram of an example of a network selection module in accordance with various embodiments;
Fig. 5 shows an example of a wireless communications system and a block diagram of an example of a base station in accordance with various embodiments;
Fig. 6 shows a block diagram of an example of a wireless communications system including a base station and a mobile device in accordance with various embodiments;
Fig. 7 is a flowchart of a method for network selection in accordance with various embodiments;
Fig. 8 is a flowchart of another method for network selection in accordance with various embodiments; and
Fig. 9 is a flowchart of another method for network selection in accordance with various embodiments.

### DETAILED DESCRIPTION

Various aspects of the disclosure provide a mobile device with a network selection component and/or algorithm that enables a selectively applied network access policy. When applied, the network access policy defines a selection procedure for the selection of a network access node based, at least in part, on radio link conditions such as available bandwidth estimated or experienced by the mobile device with more than one available access node that may operate using different radio access technologies (RATs). In some examples, the mobile device may be configured to select from among a plurality of access nodes, such as one or more of a first RAT of a cellular access node, often referred to as a Wireless Wide Area Network (WWAN) access node, and one or more of a different RAT of a different access node, such as a WiFi or Wireless Local Area Network (WLAN) access node. Communications with the selected access node may be established based at least in part on network conditions, such as which RAT has a highest estimated available bandwidth for use by the mobile device.

The apparatus and methods may be used, for example, at the time when the mobile device has a packet to transmit, or at the time when a new traffic flow starts at the mobile device or as a result of a periodic evaluation or in response to some conditions changing (for instance backhaul or radio conditions), in an initial network registration or call establishment process, a reselection procedure of a mobile device in idle mode, or in a handover procedure of a mobile device in connected mode with an active call. Various aspects of the present disclosure may provide an efficient and dynamic solution, as compared to static solutions such as the above-mentioned ANDSF, for managing network selection by selectively allowing the mobile device to consider radio link conditions, e.g. available bandwidth, optionally in combination with other conditions or preferences, when presented with more than one RAT with which communication can be established. After a preferred system is selected the mobile device may stop communications on the other systems and route traffic to the selected system or may continue on-going communication on the non-preferred system and only route some new traffic to the preferred system.

Techniques described herein may be used for various wireless communications systems such as CDMA, TDMA, FDMA, OFDMA, SC-FDMA, and other systems. The terms "system" and "network" are often used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases 0 and A are commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM). An OFDMA system may implement a radio technology such as Ultra Mobile Broadband (UMB), Evolved UTRA (E-UTRA), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies.

Thus, the following description provides examples, and is not limiting of the scope, applicability, or configuration set forth in the claims. Changes may be made in the function and arrangement of elements discussed without departing from the spirit and scope of the disclosure. Various embodiments may omit, substitute, or add various procedures or components as appropriate. For instance, the methods described may be performed in an order different from that described, and various steps may be added, omitted, or combined. Also, features described with respect to certain embodiments may be combined in other embodiments.

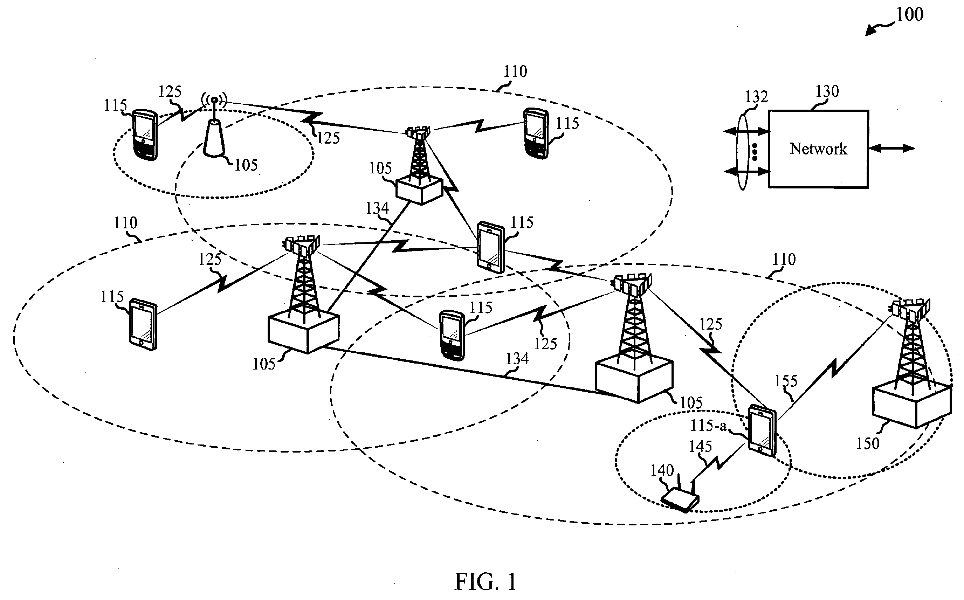

Referring first to **FIG. 1**, a diagram illustrates an example of a wireless communications system 100. The system 100 includes base stations (or cells) 105, communication devices 115, and a network 130. The base stations 105 may communicate with the communication devices 115 under the control of a base station controller (not shown), which may be part of the network 130 or the base stations 105 in various embodiments. Base stations 105 may communicate control information and/or user data with the network 130 through backhaul links 132. Backhaul links may be wired backhaul links (e.g., copper, fiber, etc.) and/or wireless backhaul links (e.g., microwave, etc.). In embodiments, the base stations 105 may communicate, either directly or indirectly, with each other over backhaul links 134, which may be wired or wireless communication links. The system 100 may support operation on multiple carriers (waveform signals of different frequencies). Multi-carrier transmitters can transmit modulated signals simultaneously on the multiple carriers. For example, each communication link 125 may be a multi-carrier signal modulated according to the various radio technologies described above. Each modulated signal may be sent on a different carrier and may carry control information (*e.g*., reference signals, control channels, etc.), overhead information, data, etc.

The base stations 105 may wirelessly communicate with the devices 115 via one or more base station antennas. Each of the base station 105 sites may provide communication coverage for a respective geographic area 110. In some embodiments, base stations 105 may be referred to as a base transceiver station, a radio base station, an access point, a radio transceiver, a basic service set (BSS), an extended service set (ESS), a NodeB, eNodeB (eNB), Home NodeB, a Home eNodeB, or some other suitable terminology. The coverage area 110 for a base station may be divided into sectors making up only a portion of the coverage area (not shown). The system 100 may include base stations 105 of different types (e.g., macro, micro, and/or pico base stations). There may be overlapping coverage areas for different technologies.

The communication devices 115 may be dispersed throughout the wireless network 100, and each device may be stationary or mobile. A communication device 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a user equipment, a mobile client, a client, or some other suitable terminology. A communication device 115 may be a cellular phone, a personal digital assistant (PDA), a wireless modem, a wireless communication device, a handheld device, a tablet computer, a laptop computer, a cordless phone, a wireless local loop (WLL) station, or the like. A communication device may be able to communicate with macro base stations, pico base stations, femto base stations, relay base stations, and the like, and may also support communications on multiple different RATs, such as different cellular/WWAN and WiFi/WLAN RATs, for example.

The transmission links 125 shown in network 100 may include uplink (UL) transmissions from a mobile device 115 to a base station 105, and/or downlink (DL) transmissions, from a base station 105 to a mobile device 115. The downlink transmissions may also be called forward link transmissions while the uplink transmissions may also be called reverse link transmissions. In embodiments, the transmission links 125 may be FDD or TDD carriers carrying bidirectional traffic within traffic frames. Data traffic may be transmitted between base station105 and mobile device 115. A basic unit of resource for the air interface used to transmit data is a resource block (RB). The base station 105 may include a scheduler that allocates RBs to a mobile device 115 for data transfer. RBs may be arranged to provide a number of frames of data, and associated subframes, with each associated subframe having a number of resource elements (REs).

In some embodiments, the system 100 is an LTE/LTE-A network. In LTE/LTE-A networks, the terms evolved Node B (eNB) and user equipment (UE) may be generally used to describe the base stations 105 and communication devices 115, respectively. The system 100 may be a Heterogeneous LTE/LTE-A network in which different types of eNBs provide coverage for various geographical regions. For example, each eNB 105 may provide communication coverage for a macro cell, a pico cell, a femto cell, and/or other types of cell. A macro cell generally covers a relatively large geographic area (e.g., several kilometers in radius) and may allow unrestricted access by UEs with service subscriptions with the network provider. A pico cell would generally cover a relatively smaller geographic area and may allow unrestricted access by UEs with service subscriptions with the network provider. A femto cell would also generally cover a relatively small geographic area (e.g., a home) and, in addition to unrestricted access, may also provide restricted access by UEs having an association with the femto cell (e.g., UEs in a closed subscriber group (CSG), UEs for users in the home, and the like). An eNB for a macro cell may be referred to as a macro eNB. An eNB for a pico cell may be referred to as a pico eNB. And, an eNB for a femto cell may be referred to as a femto eNB or a home eNB. An eNB may support one or multiple (e.g., two, three, four, and the like) cells.

The communications system 100 according to an LTE/LTE-A network architecture may be referred to as an Evolved Packet System (EPS) 100. The EPS 100 may include one or more UEs 115, an Evolved UMTS Terrestrial Radio Access Network (E-UTRAN), an Evolved Packet Core (EPC) (e.g., network 130), a Home Subscriber Server (HSS), and an Operator's IP Services. The EPS may interconnect with other access networks using other RATs. For example, system 100 may interconnect with a UTRAN-based network and/or a CDMA-based network via one or more Serving GPRS Support Nodes (SGSNs). For example, mobile device 115-a may be within overlapping coverage areas of a base station 105 of an E-UTRAN, a node-B 150 of a CDMA-based network, and a WiFi/WLAN access point 140. Transmission links 145 and 155 may connect the mobile device 115-a with WiFi/WLAN access point 140 and Node B 150, respectively. According to some embodiments, the mobile device 115-a may include network selection policies that may be selectively applied to determine whether the mobile device 115-a connects to the system via base station 105, Node B 150, or WiFi/WLAN access point 140. Such a determination, as will be described in more detail below, may be based on network parameters associated with each respective network that may be measured by the mobile device 115-a and/or reported to the mobile device 115-a by the respective network. To support mobility of UEs 115 and/or load balancing, system 100 may support handover of mobile devices 115 between a source base station 105 and a target base station 105. According to some embodiments, system may also support intra-RAT handover between base stations of the same RAT (e.g., other E-UTRAN networks), and inter-RAT handovers between Node Bs, base stations, and/or network access points of different RATs (e.g., E-UTRAN to CDMA or WLAN, etc.). The system 100 may provide packet-switched services, however, as those skilled in the art will readily appreciate, the various concepts presented throughout this disclosure may be extended to networks providing circuit-switched services.

The communication networks that may accommodate some of the various disclosed embodiments may be packet-based networks that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use Hybrid ARQ (HARQ) to provide retransmission at the MAC layer to improve link efficiency. In the control plane, the Radio Resource Control (RRC) protocol layer may provide establishment, configuration, and maintenance of an RRC connection between the UE and the network used for the user plane data. At the Physical layer, the transport channels may be mapped to Physical channels.

LTE/LTE-A utilizes orthogonal frequency division multiple-access (OFDMA) on the downlink and single-carrier frequency division multiple-access (SC-FDMA) on the uplink. OFDMA and SC-FDMA partition the system bandwidth into multiple (K) orthogonal subcarriers, which are also commonly referred to as tones, bins, or the like. Each subcarrier may be modulated with data. The spacing between adjacent subcarriers may be fixed, and the total number of subcarriers (K) may be dependent on the system bandwidth. For example, K may be equal to 72, 180, 300, 600, 900, or 1200 with a subcarrier spacing of 15 kilohertz (KHz) for a corresponding system bandwidth (with guardband) of 1.4, 3, 5, 10, 15, or 20 megahertz (MHz), respectively. The system bandwidth may also be partitioned into sub-bands. For example, a sub-band may cover 1.08 MHz, and there may be 1, 2, 4, 8 or 16 sub-bands.

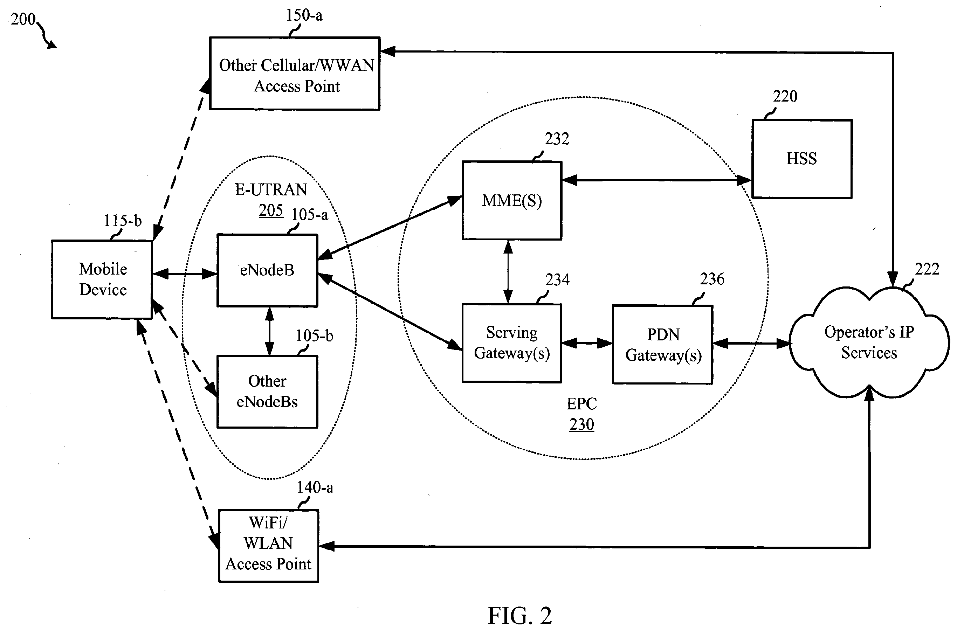

**FIG. 2** is a diagram illustrating a network architecture 200 in accordance with various embodiments, and may be an example of a system that forms at least a part of the system 100 of FIG. 1. The network architecture 200 may include multiple different access nodes that operate according to different RATs. The network architecture 200 may include one or more mobile devices 115-b, an Evolved UMTS Terrestrial Radio Access Network (E-UTRAN) 205 having multiple e Node Bs 105-a, 105-b, an Evolved Packet Core (EPC) 230, a Home Subscriber Server (HSS) 220, and an Operator's IP Services 222. Other access networks may also be available to mobile device(s) 115-b through one or more other cellular/WWAN access node(s) 150-a and/or one or more WiFi/WLAN access node(s) 140-a, for example. According to some embodiments, the mobile device 115-b may include network selection policies that may determine whether the mobile device 115-a connects to the system via eNBs 105, other cellular/WWAN access node 150-a, or WiFi/WLAN access node 140-a. In some embodiments, as will be described in more detail below, a wireless device 115-b may selectively apply a network access policy to make such a determination based on an estimated bandwidth that may be determined for each of the different access points. The network access policy may be selectively applied, for example, at particular time of the day when traffic and/or load balancing may be desirable for a network operator. As illustrated in FIG. 2, the network architecture 200 provides packet-switched services, however, as those skilled in the art will readily appreciate, the various concepts presented throughout this disclosure may be extended to networks providing circuit-switched services.

In the example of FIG. 2, various components of an LTE system are illustrated for purposes of discussion of an exemplary system, with the understanding that the concepts described herein are equally applicable to other types of systems and network architectures. In this example, E-UTRAN 205 may include an eNB 105-a and other eNBs 105-b. The eNB 105-a may provide user and control plane protocol terminations toward the mobile device 115-b. The eNB 105-a may be connected to the other eNBs 105-b via an X2 interface (e.g., backhaul). The eNB 105-a may provide an access point to the EPC 230 for the mobile device 115-a. The eNB 105-a may be connected by an S1 interface to the EPC 230. The EPC 230 may include one or more Mobility Management Entities (MMEs) 232, one or more Serving Gateways 234, and one or more Packet Data Network (PDN) Gateways 236. The MME 232 may be the control node that processes the signaling between the mobile device 115-b and the EPC 230. Generally, the MME 232 may provide bearer and connection management. All user IP packets may be transferred through the Serving Gateway 234, which itself may be connected to the PDN Gateway 236. The PDN Gateway 236 may provide mobile device IP address allocation as well as other functions. The PDN Gateway 236 may be connected to the Operator's IP Services 222. The Operator's IP Services 222 may include the Internet, the Intranet, an IP Multimedia Subsystem (IMS), and a Packet-Switched (PS) Streaming Service (PSS). As mentioned above, the MME(s) 232, serving gateway(s) 234, one or more PDN Gateway(s) 236, along with eNB(s) 105 may generally be referred to as network entities.

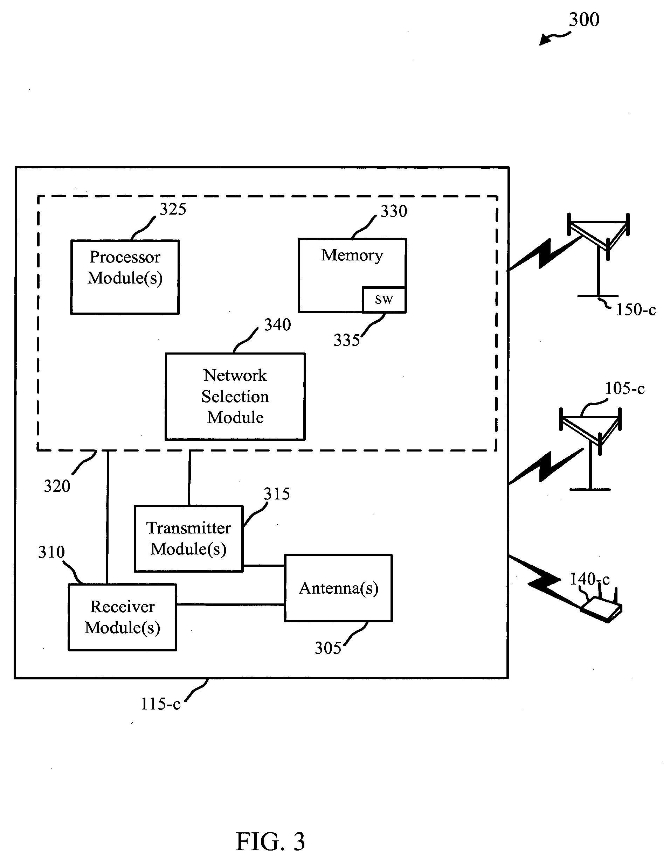

With reference now to **FIG. 3**, an exemplary system 300 is illustrated in accordance with various embodiments, and may be an example of a system that forms at least a part of the system 100 of FIG. 1 or system 200 of FIG. 2. System 300 includes a mobile device 115-c that may communicate with base station 105-c, other WWAN access node 150-c, and/or WiFi/WLAN access node 140-c to receive access to one or more wireless networks. Mobile device 115-c may be an example of a mobile device 115 of FIGS. 1-2. Mobile device 115-c, includes one or more antenna(s) 305 communicatively coupled to receiver module(s) 310 and transmitter module(s) 315, which are in turn communicatively coupled to a control module 320. Control module 320 includes one or more processor module(s) 325, a memory 330 that may include software 335, and a network selection module 340. The software 335 may be for execution by processor module 325 and/or network selection module 340.

The processor module(s) 325 may include an intelligent hardware device, e.g., a central processing unit (CPU), a microcontroller, an application specific integrated circuit (ASIC), etc. The memory 330 may include random access memory (RAM) and read-only memory (ROM). The memory 330 may store computer-readable, computer-executable software code 335 containing instructions that are configured to, when executed (or when compiled and executed), cause the processor module 325 and/or network selection module 340 to perform various functions described herein (e.g., RAT identification, network selection, bandwidth estimation, etc.). The network selection module 340 may be implemented as a part of the processor module(s) 325, or may be implemented using one or more separate CPUs or ASICs, for example. The transmitter module(s) 315 may transmit to base station 105-c, WWAN access points 150-c, and WiFi/WLAN access points 140-c (and/or other base stations) to establish communications with one or more wireless communications networks (e.g., E-UTRAN, UTRAN, etc.), as described above. The network selection module 340 may be configured to control selection of one of multiple available RATs, based at least in part on estimated available bandwidth, in order to guide establishing communication with one of the multiple available access nodes 105-c, 150-c, and 140-c. The receiver module(s) 310 may receive downlink transmissions from base station 105-c (and/or other base stations), such as described above. Downlink transmissions are received and processed at the mobile device 115-c. The components of mobile device 115-c may, individually or collectively, be implemented with one or more Application Specific Integrated Circuits (ASICs) adapted to perform some or all of the applicable functions in hardware. Each of the noted modules may be a means for performing one or more functions related to operation of the mobile device 115-c.

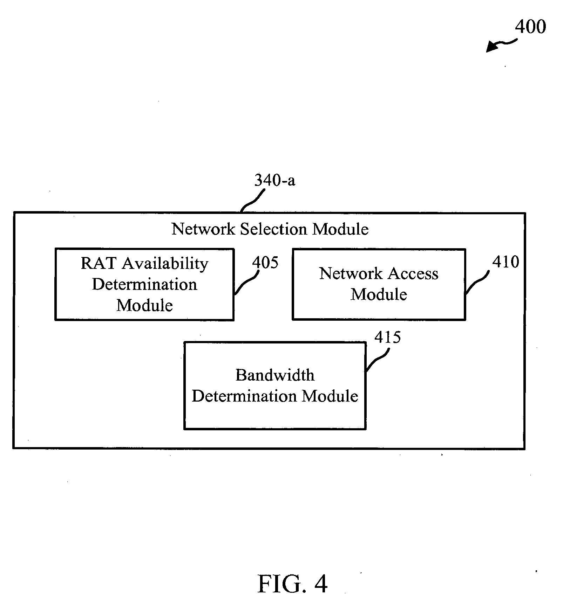

**FIG. 4** illustrates an example of a network selection module 340-a, which includes RAT availability determination module 405, a network access module 410, and a bandwidth determination module 415. RAT availability determination module 405 may determine that the mobile device may be able to communicate with multiple different RATs. Multiple available RATs may include, as discussed above, any of a plurality of different types of radio access technologies, such as but not limited to a first RAT including cellular or Wireless Wide Area Network (WWAN) technology, and a second RAT including WiFi or Wireless Local Area Network (WLAN) technology. For each RAT type, a plurality of networks may be available. For instance in the case of WWAN RAT or WLAN RAT, networks from a first and second network operator may be available. Correspondingly, access nodes 105-c, 140-c, and 150-c may each have a respective backhaul link to one or more communication networks, such as a packet switched network like the Internet.

Network access module 410 may be configured to provide any required network access credentials or other information that may be necessary to establish communication with a particular network that may be accessed via access nodes 105-c, 140-c, and 150-c. Furthermore, network access module 410 may include or access one or more network selection policies that may be used to determine that one of the available networks available via access nodes 105-c, 140-c, and 150-c may be a preferred network based on one or more parameters associated with the networks (e.g., estimated network bandwidth). According to some examples, an operator may provide a network access policy to mobile device 105-c, and the mobile device 105-c may selectively apply the network access policy based on one or more predetermined criteria to select a network for establishing communication. As used herein, the terms "establishing communication" may refer to, but are not limited to, one or more of a time when the mobile device has a packet to transmit, a time when a new traffic flow starts at the mobile device, as a result of a periodic evaluation, in response to some conditions changing (for instance, backhaul or radio conditions), an initial registration in order to camp on the access node, a new call establishment procedure for setting up a new connection for a new active call (which may include maintaining an existing active call with an access node of one RAT while setting up the new active call on a new access node of a different RAT), an idle mode cell reselection procedure for switching to a new access node, or a connected mode handover procedure for switching an existing active call to be served by a new access node. After "establishing communication" with a preferred RAT the mobile device may stop all communication on the other systems and route all traffic to the preferred RAT or may continue on-going communication on the non-preferred system and only route some new traffic to the preferred RAT. The establishing communication may apply only to some selected flows or bearer, such as a default bearer. The network access policy may selectively be applied, as mentioned above, based on one or more predetermined criteria. Such predetermined criteria may include, for example, one or more of a current time of day, a current location of the mobile device, a cost of accessing one of the more than one RAT, a roaming status of the mobile device, a subscription profile of the mobile device, or a current data usage of the mobile device, or an identity of a WLAN or cellular access node. The roaming status is specific to the RAT connection and a device may be roaming on a first RAT connection and simultaneously not roaming on a second RAT connection. The identity of the access node may be a BSSID, SSID or other Network identifier, a local Cell identity, a Global Unique cell identifier or a public land mobile identifier or other relevant identifier.

Bandwidth determination module 415, according to some embodiments, may determine an estimate of bandwidth associated with each available network that may be used by network access module 410 to determine a particular network to access. For example, upon detecting multiple available RATs by the RAT availability determination module 405, network access module 410 may obtain a network access policy that defines how to select one of the multiple available RATs for establishing communication. Network access module 410 may, for example, access a locally stored version of network access policy, such as in a memory of the mobile device (e.g., memory 330 of FIG. 3). In other examples, the network access module 410 may receive network access policy or an update to a previously stored version from a network entity, such as one of multiple available access nodes 105-c, 140-c, and 150-c.

The network access policy may include a number of criteria for consideration in selecting a network for establishing communications. For example, network access policy may include a select fastest RAT (SFR) mode that configures network access module 410 to select a RAT having a highest one of estimated available bandwidth as determined by bandwidth determination module 415. Bandwidth determination module 415 may determine estimated available bandwidth for a plurality of the multiple available RATs. For example, bandwidth determination module 415 may determine a first estimate for a first RAT corresponding to base station 105-c of FIG. 3, a second estimate for WWAN access node 150-c, and a third estimate for a RAT corresponding to WiFi/WLAN access node 140-c. Estimated available bandwidth may be based on one more bandwidth-related or bandwidth-indicating parameters of a radio link and/or a backhaul link of each radio access node for each RAT.

Further, in other examples, network access policy may additionally include one or more selection conditions to be satisfied. For example, selection conditions may include, but are not limited to, one or more of each of an operational condition, a RAT-specific selection condition, a threshold condition, and a hysteresis condition. For instance, an operational condition may include, an identity of a network (e.g., apply when the identity points to an operator-WLAN), a time of day, a location, a cost of access (e.g., apply when the cost of access to operator-WLAN is the same as, or with a given percentage, of cost to access operator-cellular), a roaming state, an authentication method (e.g., apply when EAP is used to authenticate on the WLAN, implying a relationship to the operator that has provided the SIM to the UE), a subscription profile matches a given subscription (e.g., a subscription profile includes unlimited data on WLAN and on cellular), and a current data usage meets a data usage threshold (e.g., a user of the UE has 2GB a month and has only used 100MB on the 20th day of the billing cycle). In other examples, an operational condition may relate to a parameter that identifies a relationship to a given operator, and/or that identifies or relates to a cost. As mentioned above, the network access policy may be selectively applied based on one or more predefined criteria, which in some embodiments may include one or more of the described operational conditions, for example. Additional RAT-specific selection conditions in a network access policy may include one or more conditions for a given RAT to achieve in order for the given RAT to be selected, such as one or more thresholds associated with determining to select or not select a RAT. Additionally, for instance, a hysteresis condition may be a parameter value or threshold that biases maintaining an existing RAT with which the mobile device is currently in communication as compared to selecting a new RAT, e.g. to avoid a ping-pong effect.

As such, it should be noted that network access policy may be selectively applied to dictate network selection based on one or more selected RAT parameters, such as a RAT having the highest estimated available bandwidth, or based on considering estimated available bandwidth of each RAT in combination with one or more selection conditions, such as RAT-specific selection conditions and/or one or more threshold conditions and/or one or more hysteresis conditions. In any case, as radio link conditions, and hence estimated available bandwidth, of each of the multiple available RATs are variable, and network access module 410 executing a network access policy therefore provides a dynamic network selection determination that takes into account estimated available bandwidth for a particular network at a particular time.

Thus, according to aspects of various embodiments, rather than relying on static rules or preferences for network selection, network access module 410 of a mobile device enables the mobile device to make a dynamic network selection decision based at least in part on current RAT radio link conditions, such as estimated available bandwidth, between mobile device 115-c and available access nodes 105-c, 140-c, and 150-c having different RATs.

In other aspects, bandwidth determination module 415 may estimate the available bandwidth for each RAT by measuring an available radio link bandwidth, e.g. associated with the access node of each RAT. In some examples, bandwidth determination module 415 also makes a determination of network loading for networks associated with each RAT, such as through a determination of usage of the radio resource or backhaul bandwidth of backhaul links of the respective access nodes of each RAT is also considered. For example, bandwidth determination module 415 may estimate the available bandwidth as a minimum of a radio link bandwidth and a backhaul bandwidth, e.g. min (radio BW, backhaul BW). The backhaul bandwidth may be determined, for example, through the receipt of a message from a serving RAT including information about the available backhaul bandwidth. In other examples, backhaul bandwidth may be estimated through the use of an active probe or via crowd sourcing. In still other examples, estimating the available bandwidth for each RAT is based on a function of one or more radio link bandwidth-indicating parameters, such as a signal-to-noise ratio (SNR), a resource utilization, a noise rise, a RAT load, slot utilization factor, an available transmit power, a number of codes available, and a number of resource blocks available, for example. In further aspects, estimating the available bandwidth as a function of one or more radio link bandwidth-indicating parameters may include estimating a quality of a radio link and link capacity, estimating a fraction of system resources available to the user equipment, and scaling the link capacity with the fraction of system resources available to the user equipment to generate the available bandwidth for each RAT. The estimation of available bandwidth attempts to estimate what throughput the UE would achieve if it were to connect to the network and receive or transmit a large file.

As mentioned above, in some examples network access module 410 may also evaluate one or more predetermined criteria to determine whether to apply the network access policy. Such predetermined criteria may include one or more operational parameters to be satisfied in order to access a network associated with the RAT, such as a RAT identify, a current time of day, a current location of the mobile device, a cost of accessing the RAT, a roaming status, an authentication method, a subscription profile, and/or a current data usage. In some embodiments, one or more operational parameters may also be defined as conditions for RAT selection, and a particular RAT that does not meet one or more identified operational parameter conditions may not be selected for communications. Thus, in some examples, although one particular RAT may provide the highest estimated bandwidth, a different RAT may be selected based on the selection conditions. As also mentioned above, in some examples network access module 410 may also evaluate one or more threshold conditions to determine whether one or more thresholds are met. For example, threshold conditions may include a first bandwidth-related parameter threshold for a first RAT and a second bandwidth-related parameter threshold for a second RAT. Additionally, network access module 410 may also use a combination of selection conditions and/or thresholds. For instance, selection conditions may be in a form that includes a preference for selecting a given RAT, e.g. "prefer WLAN," conditioned on one or more RAT-specific conditions and/or thresholds, e.g. "except if WLAN estimated available bandwidth is less than a first threshold, and cellular/WWAN estimated available bandwidth is greater than a second threshold." In another example, selection conditions may be in a form that includes a preference for selecting a given RAT, e.g. "prefer WLAN over cellular/WWAN," conditioned on one or more RAT-specific conditions and/or thresholds, e.g. "if a WLAN link capacity related parameter and a network load-related parameter meet a first threshold (or respective first thresholds), and a cellular/WWAN link capacity related parameter and a network load-related parameter do not meet a second threshold (or respective second thresholds)."

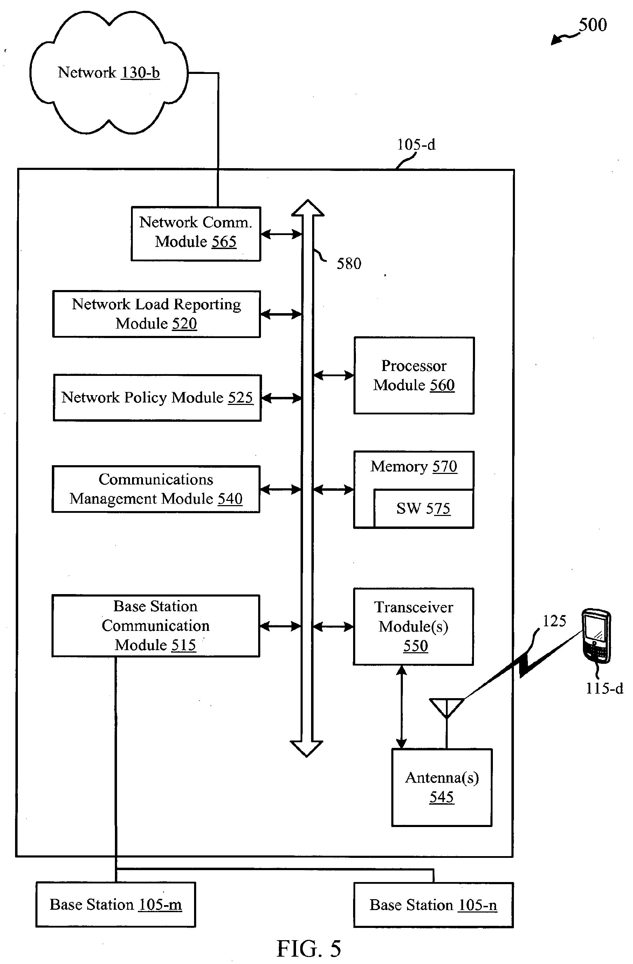

With reference now to **FIG. 5**, a block diagram of a communications system 500 that may be configured to provide network selection information and related conditions is described. This system 500 may be an example of aspects of the system 100 depicted in FIG. 1, system 200 of FIG. 2, or system 300 of FIG. 3. System 500 may include a base station 105-d. The base station 105-d may include antenna(s) 545, transceiver module(s) 550, memory 570, and a processor module 560, which each may be in communication, directly or indirectly, with each other (*e.g*., over one or more buses 580). The transceiver module(s) 550 may be configured to communicate bi-directionally, via the antenna(s) 545, with mobile device 115-d. The transceiver module(s) 550 (and/or other components of the base station 105-d) may also be configured to communicate bi-directionally with one or more networks. In some cases, the base station 105-d may communicate with network 130-b through network communications module 565. Base station 105-d may be an example of an eNodeB base station, a Home eNodeB base station, a NodeB base station, and/or a Home NodeB base station. While FIG. 5 illustrates a WWAN base station 105-d, other types of access nodes and/or associated network entities may include similar components and provide similar functionality, as will be readily recognized by one of skill in the art.

Base station 105-d may also communicate with other base stations 105, such as base station 105-m and base station 105-n. In some cases, base station 105-d may communicate with other base stations such as 105-m and/or 105-n utilizing base station communication module 515. In some embodiments, base station communication module 515 may provide an interface with one or more other types of access nodes that utilize other RATs.

The memory 570 may include random access memory (RAM) and read-only memory (ROM). The memory 570 may also store computer-readable, computer-executable software code 575 containing instructions that are configured to, when executed, cause the processor module 560 to perform various functions described herein (*e.g*., network selection policy, providing network loading information, etc.). Alternatively, the software code 575 may not be directly executable by the processor module 560 but be configured to cause the processor, *e.g*., when compiled and executed, to perform functions described herein.

The processor module 560 may include an intelligent hardware device, *e.g*., a central processing unit (CPU), a microcontroller, an application-specific integrated circuit (ASIC), etc. The transceiver module(s) 550 may include a modem configured to modulate the packets and provide the modulated packets to the antenna(s) 545 for transmission, and to demodulate packets received from the antenna(s) 545. While some examples of the base station 105-d may include a single antenna 545, the base station 105-d may include multiple antennas 545 for multiple links. According to the architecture of FIG. 5, the base station 105-d may further include a communications management module 540. The communications management module 540 may manage communications with other base stations 105. By way of example, the communications management module 540 may be a component of the base station 105-d in communication with some or all of the other components of the base station 105-d via a bus 580. Alternatively, functionality of the communications management module 540 may be implemented as a component of the transceiver module 550, as a computer program product, and/or as one or more controller elements of the processor module 560.

As discussed above, in some aspects UE 115-d may perform network selection based on network access policies and RAT parameters such as estimated bandwidth associated with available networks. As mentioned, in some examples bandwidth estimation may be based in part on a network load or backhaul bandwidth of a particular network. Network load reporting module 520, according to some examples, may provide such network load or backhaul bandwidth information to mobile device 115-d. The network access policy to be implemented by mobile device 115-d may be provided by network policy module 525. Such network access policies may include a SFR policy, such as described above, which may be applied alone or in conjunction with one or more selection conditions or thresholds. Additionally, network access policies may include one or more predetermined criteria that define when the network access policy is to be applied in the selection of a RAT for wireless communication. In some embodiments, the network load reporting module 520 and network policy module 525 may cooperate with another network entity such as a mobility management entity (MME) or packet data network (PDN) gateway to provide related information via other network entities to mobile device 115-d and/or other base stations or access nodes. While FIG. 5 illustrates network load reporting module 520 and network policy module 525 as part of base station 105-d, in various other embodiments, all or substantially all of the functions of the network load reporting module 520 and network policy module 525 may be performed by the base station 105-d or by another network entity such as a MME, serving gateway, and/or PDN gateway, for example.

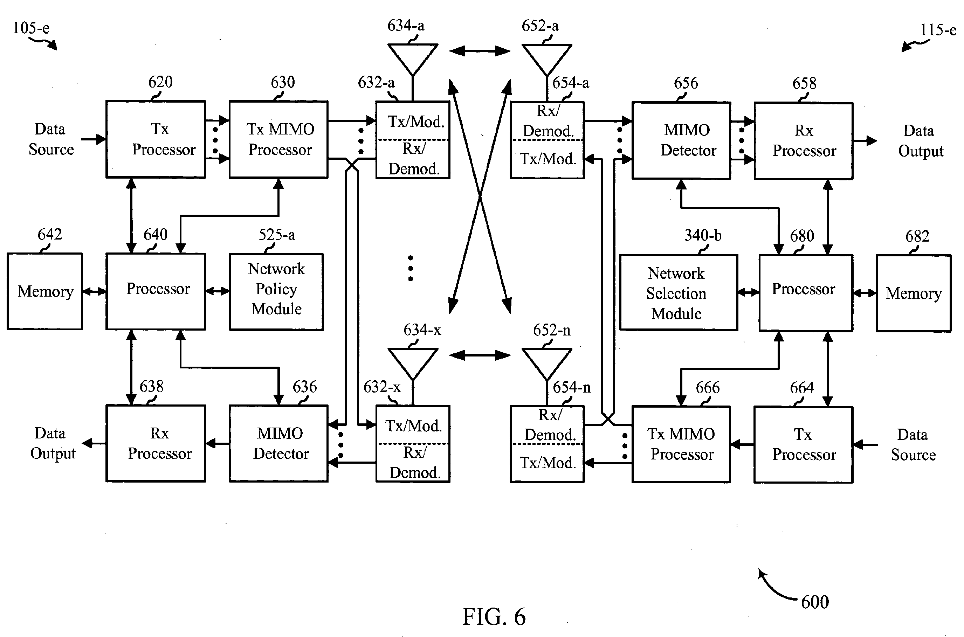

**FIG. 6** is a block diagram of a system 600 including a base station 105-e and a mobile device 115-e. This system 600 may be an example of aspects of the system 100 of FIG. 1, system 200 of FIG. 2, system 300 of FIG. 3, or system 500 of FIG. 5. The base station 105-e may be equipped with antennas 634-a through 634-x, and the mobile device 115-e may be equipped with antennas 652-a through 652-n. At the base station 105-e, a transmit processor 620 may receive data from a data source.

The transmit processor 620 may process the data. The transmit processor 620 may also generate reference symbols, and a cell-specific reference signal. A transmit (TX) MIMO processor 630 may perform spatial processing (*e.g*., precoding) on data symbols, control symbols, and/or reference symbols, if applicable, and may provide output symbol streams to the transmit modulators 632-a through 632-x. Each modulator 632 may process a respective output symbol stream (*e.g*., for OFDM, etc.) to obtain an output sample stream. Each modulator 632 may further process (*e.g*., convert to analog, amplify, filter, and upconvert) the output sample stream to obtain a downlink (DL) signal. In one example, DL signals from modulators 632-a through 632-x may be transmitted via the antennas 634-a through 634-x, respectively according to a particular TDD Uplink/Downlink configuration.

At the mobile device 115-e, the mobile device antennas 652-a through 652-n may receive the DL signals according to the particular TDD Uplink/Downlink configuration from the base station 105-e and may provide the received signals to the demodulators 654-a through 654-n, respectively. Each demodulator 654 may condition (*e.g.*, filter, amplify, downconvert, and digitize) a respective received signal to obtain input samples. Each demodulator 654 may further process the input samples (*e.g*., for OFDM, etc.) to obtain received symbols. A MIMO detector 656 may obtain received symbols from all the demodulators 654-a through 654-n, perform MIMO detection on the received symbols if applicable, and provide detected symbols. A receive processor 658 may process (*e.g.*, demodulate, deinterleave, and decode) the detected symbols, providing decoded data for the mobile device 115-e to a data output, and provide decoded control information to a processor 680, or memory 682. The processor 680 may be coupled with a network selection module 340-b that may determine a particular RAT available to the mobile device 115-e is to be used for network access based on one or more of bandwidth available through an access node associated with the RAT, selection conditions, and/or related thresholds, similarly as discussed above. The processor 680 may perform frame formatting according to a current bearer assignments and data to be transmitted on each bearer.

On the uplink (UL), at the mobile device 115-e, a transmit processor 664 may receive and process data from a data source. The transmit processor 664 may also generate reference symbols for a reference signal. The symbols from the transmit processor 664 may be precoded by a transmit MIMO processor 666 if applicable, further processed by the demodulators 654-a through 654-n (e.g., for SC-FDMA, etc.), and be transmitted to the base station 105-e in accordance with the transmission parameters received from the base station 105-e. At the base station 105-e, the UL signals from the mobile device 115-e may be received by the antennas 634, processed by the demodulators 632, detected by a MIMO detector 636 if applicable, and further processed by a receive processor 638. The receive processor 638 may provide decoded data to a data output and to the processor 640. A memory 642 may be coupled with the processor 640. A network policy module 525-a may, in some embodiments, provide a network access policy to mobile device 115-e, such as described above. Such a network access policy may be implemented by the mobile device 115-e to select an access node, for example, that provides a highest estimated bandwidth to the mobile device 115-e, as discussed above. Similarly as discussed above, system 600 may also include other access nodes for network access by a mobile device 115-e, and the selection of the particular access node may be based on the network access policy. Multiple component carriers may carry uplink and downlink transmissions between mobile device 115-e and base station 105-e. The components of the mobile device 115-d may, individually or collectively, be implemented with one or more Application Specific Integrated Circuits (ASICs) adapted to perform some or all of the applicable functions in hardware. Each of the noted modules may be a means for performing one or more functions related to operation of the system 600. Similarly, the components of the base station 105-h may, individually or collectively, be implemented with one or more Application Specific Integrated Circuits (ASICs) adapted to perform some or all of the applicable functions in hardware. Each of the noted components may be a means for performing one or more functions related to operation of the system 600.

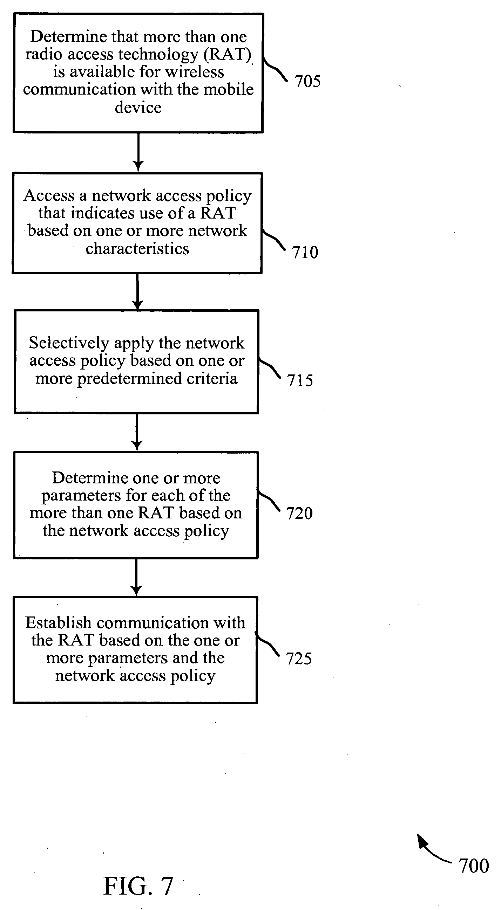

**FIG. 7** illustrates a method 700 that may be carried out by a mobile device in a wireless communications system according to various embodiments. The method 700 may, for example, be performed by a mobile device of FIG. 1, 2, 3, 5 or 6, or using any combination of the devices described for these figures. Initially, at block 705, the mobile device determines that more than one radio access technology (RAT) is available for wireless communication with the mobile device. For example, in an aspect, mobile device and/or associated network selection module may include a RAT detection component configured to determine presence and suitability for communication of multiple available RATs, such as a first RAT, e.g. WWAN, of WWAN access node and a second RAT, e.g. WLAN, of WLAN access node. For instance, a network selection module executing RAT detection component may detect a signal, such as a pilot, broadcast by WWAN access node and WLAN access node, and compare a received signal strength-related parameter of the signal to a minimum threshold for communication with the respective access node. Moreover, network selection module executing such a RAT detection component may identify a respective RAT used by each WWAN access node and WLAN access node, for example, based on a radio communication protocol and/or frequency used to detect and/or decode the signal from each access node. Since different RATs may inherently have different maximum bandwidths, or since mobile device may have subscriptions associated with different allowable maximum bandwidths on different RATs, the availability of different RATs potentially provides mobile device with an opportunity to improve an available bandwidth for future or existing communications. Additionally, such mobile device behavior may allow an operator to provide improved user experience while deploying a network relying on a plurality of RATs, as the mobile device selects the best RAT available, according to the throughput.

At block 710, the mobile device accesses a network access policy that indicates, in this example, use of a RAT based on one or more network characteristics. Such a network access policy may be stored on the mobile device, or may be retrieved from a network component, such as one of WWAN access node or WLAN access node, for example. Further, similarly as described above, a network access policy may specify any of a number of parameters to be evaluated in RAT selection, such as estimated available bandwidth, for example. In some examples, estimated available bandwidth may be determined based on estimated bandwidth for communications with the access node of the RAT, network loading, backhaul bandwidth associated with the access node of the RAT, one or more selection conditions, and/or one or more identified thresholds. In some embodiments, such a determination may be made based solely on a bandwidth for communications with the access node, while other embodiments may include one or more other factors such as described.

At block 715, mobile device selectively applies the network access policy based on one or more predetermined criteria. Such predetermined criteria may include, for example, one or more operating conditions similarly as discussed above. At block 720, the mobile device determines one or more parameters for each of the more than one RAT based on the network access policy. Finally, at block 725, the mobile device establishes communication with the RAT based on the one or more parameters and the network access policy. The one or more parameters, as discussed above, a function of one or more radio link bandwidth-indicating parameters such as, for example, one or more of a signal-to-noise ratio (SNR), a resource utilization, an noise rise, a RAT load, a number of codes available, a slot utilization factor, a transmit power available or a number of resource blocks available. In further examples, the one or more parameters, additionally or alternatively, may include an estimation of a quality of a radio link and link capacity, an estimation a fraction of system resources available to the mobile device, and a scaling of the link capacity with the fraction of system resources available to the mobile device to generate the available bandwidth for each RAT.

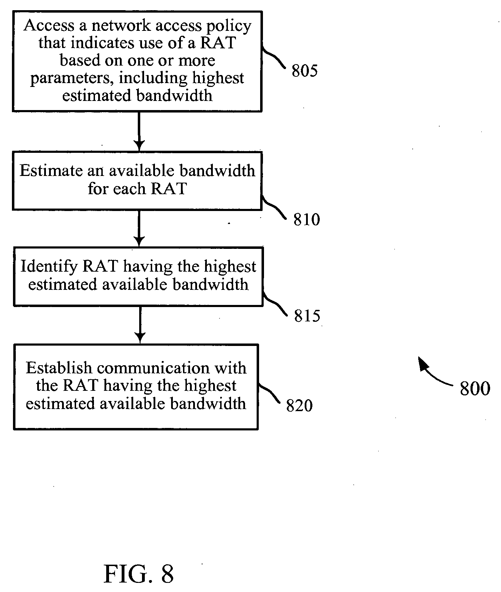

**FIG. 8** illustrates a method 800 that may be carried out by a mobile device in a wireless communications system according to various embodiments. The method 800 may, for example, be performed by a mobile device of FIG. 1, 2, 3, 5 or 6, or using any combination of the devices described for these figures. Initially, at block 805, the mobile device may access a network access policy that indicates use of a RAT based on one or more parameters, including highest estimated bandwidth, for example.

At block 810, the mobile device estimates an available bandwidth for each RAT. In some examples, the estimation of the available bandwidth for each RAT may include measuring an available radio link bandwidth and/or determining a backhaul bandwidth. The backhaul bandwidth may be determined, for example, based on a backhaul bandwidth information received in a message from another node, an estimation the backhaul bandwidth made by the mobile device, and/or information related to a network load for each RAT. In some examples, available bandwidth may also be based on a measured a link capacity for each RAT at the mobile device and receiving parameters related to a network load for each RAT. In still further examples, the estimation of available bandwidth may also be based on one or more selection conditions and/or thresholds associated with one or more RATs. At block 815, the mobile device identifies a RAT having the highest estimated available bandwidth. The identification of the RAT having the highest estimated available bandwidth may be determined, for example, by comparing estimated bandwidth values for each identified RAT. Finally, at block 820, the mobile device establishes communication with the RAT having the highest estimated available bandwidth.

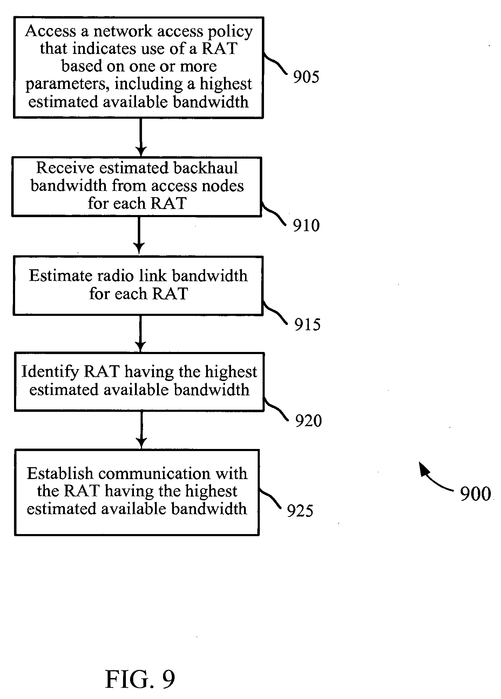

**FIG. 9** illustrates a method 900 that may be carried out by a mobile device in a wireless communications system according to various embodiments. The method 900 may, for example, be performed by a mobile device of FIG. 1, 2, 3, 5 or 6, or using any combination of the devices described for these figures. Initially, at block 905, the mobile device accesses a network access policy that indicates use of a RAT based on one or more parameters, including a highest estimated available bandwidth. Such a network access policy, as discussed above, may be stored on the mobile device, or may be retrieved from a network component, such as one of WWAN access node or WLAN access node, for example. As also discussed above, in some examples the network access policy may indicate that estimated available bandwidth is to account for network traffic or network loading associated with an access node of the particular RAT. At block 910, the mobile device receives estimated backhaul bandwidth from access nodes for each RAT. The estimated backhaul bandwidth may be sent to the mobile device, for example, in a message from the access node.

At block 915, the mobile device estimates radio link bandwidth for each RAT. The mobile device may then identify the RAT having the highest estimated available bandwidth, as indicated at block 920. The RAT with the highest estimated available bandwidth may be determined, for example, based on the estimated radio link bandwidth and the associated backhaul bandwidth. At block 925, the mobile device establishes communication with the RAT having the highest estimated available bandwidth.

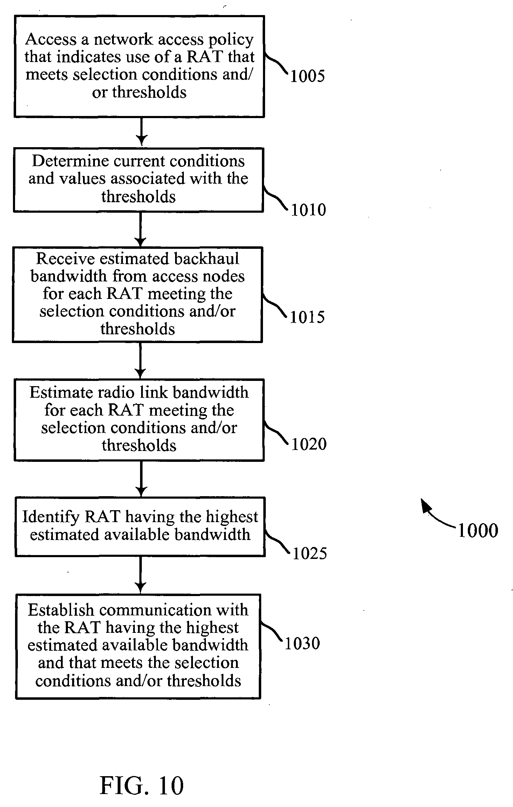

**FIG. 10** illustrates a method 1000 that may be carried out by a mobile device in a wireless communications system according to various embodiments. The method 1000 may, for example, be performed by a mobile device of FIG. 1, 2, 3, 5 or 6, or using any combination of the devices described for these figures. Initially, at block 1005, the mobile device accesses a network access policy that indicates use of a RAT that meets selection conditions and/or thresholds. Similarly as discussed above, if one or more selection conditions and/or thresholds are established in the network access policy, the mobile device may identify a first RAT as having the highest estimated available bandwidth, but determine that one or more selection conditions and/or thresholds are not met, which may trigger the mobile device to establish communication with a second RAT for which selection conditions and/or thresholds are satisfied. In some further examples, a network access policy may include RAT-specific selection conditions and/or one or more threshold conditions and/or one or more hysteresis conditions, and a RAT may be identified based on the evaluation of the one or more selection conditions. In some examples, the network access policy may include a first bandwidth-related parameter threshold for a first RAT and a second bandwidth-related parameter threshold for a second RAT, and establishing communication with the first or second RAT may be based on whether the first or second RATs meet the bandwidth-related threshold associated with the particular RAT. In other examples, selection conditions may include one or more of a RAT identity, a current time of day, a current location of the mobile device, a cost of accessing a RAT, a roaming status of the mobile device, an authentication method for the RAT, a subscription profile of the mobile device, or a current data usage of the mobile device.

At block 1010, the mobile device determines current conditions and values associated with the thresholds. Such determinations may be made based on a status of the mobile device, other information available on the mobile device (e.g., location, time, roaming status, etc.) and/or information received from an access node (e.g., RAT identity, authentication method, etc.). At block 1015, the mobile device may receive estimated backhaul bandwidth from access nodes for each RAT meeting the selection conditions and/or thresholds. For example, the mobile device may determine that a subset of the RATs meet all of the current conditions and thresholds, and for each RAT in the subset may query an associated access node to determine an estimate of backhaul bandwidth. At block 1020, radio link bandwidth is estimated for each RAT meeting the selection conditions and/or thresholds. Radio link bandwidth may be estimated as described above, for example. At block 1025, the mobile device identifies a RAT having the highest estimated bandwidth. Finally, at block 1030, communications are established with the RAT having the highest estimated available bandwidth and that meets the selection conditions and/or thresholds. In such a manner, for example, if one or more selection conditions and/or thresholds are established in the network access policy, the mobile device may identify a first RAT as having the highest estimated available bandwidth, but determine that one or more selection conditions and/or thresholds are not met, which may trigger the mobile device to establish communication with a second RAT for which selection conditions and/or thresholds are satisfied.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peerto-peer (e.g., mobile-to-mobile) ad hoc network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method (700) of managing network selection at a mobile device, comprising:
determining (705) that more than one radio access technology (RAT) is available for wireless communication with the mobile device;
accessing (710) a network access policy that indicates use of a RAT based on one or more network characteristics;
selectively applying (715) the network access policy based on one or more predetermined criteria;
wherein the one or more predetermined criteria comprise a current data usage of the mobile device;
determining (720) one or more parameters for each of the more than one RAT based on the network access policy; and
establishing (725) communication with the RAT based on the one or more parameters and the network access policy.

2. The method of claim 1, wherein determining the one or more parameters comprises:
estimating an available bandwidth for one or more RAT; and
identifying the RAT having the highest estimated available bandwidth.

3. The method of claim 2, wherein estimating the available bandwidth comprises at least one of estimating an available radio link bandwidth or determining a backhaul bandwidth.

4. The method of claim 3, wherein determining the backhaul bandwidth comprises at least one of receiving the backhaul bandwidth in a message from another node or estimating the backhaul bandwidth.

5. The method of claim 3, wherein estimating the available bandwidth comprises measuring a link capacity at the mobile device and receiving or estimating parameters related to a network load.

6. The method of claim 1, wherein the one or more predetermined criteria further comprise one or more of:
a current time of day;
a current location of the mobile device;
a cost of accessing one of the more than one RAT;
a roaming status of the mobile device on one or more RAT;
a subscription profile of the mobile device; or
an identity of a WLAN or cellular access node.

7. The method of claim 1, wherein the network access policy comprises a first bandwidth-related parameter threshold for a first RAT and a second bandwidth-related parameter threshold for a second RAT.

8. The method of claim 7, further comprising:
determining a first bandwidth-related parameter of the first RAT meets the first bandwidth-related parameter threshold;
determining a second bandwidth-related parameter of the second RAT fails to meet the second bandwidth-related parameter threshold; and
establishing communication with the first RAT.

9. The method of claim 2, wherein estimating the available bandwidth for each RAT further comprises estimating as a function of one or more bandwidth-indicating parameters.

10. The method of claim 9, wherein the one or more bandwidth-indicating parameters include one or more of a signal-to-noise ratio (SNR), a resource utilization, an noise rise, a RAT load, a number of codes available, a slot utilization factor, a transmit power available, a number of resource blocks available, or a capacity and utilization of access node backhaul.

11. The method of claim 1, wherein the network access policy further comprises a selection condition, and wherein establishing communication with the RAT is further based on the selection condition.

12. The method of claim 11, wherein the selection condition comprises a first RAT selection condition for selecting the RAT having the highest estimated available bandwidth and a second RAT selection condition for selecting a second RAT.

13. An apparatus for managing network selection at a mobile device, comprising:
means for determining that more than one radio access technology (RAT) is available for wireless communication with the mobile device;
means for accessing a network access policy that indicates use of a RAT based on one or more network characteristics;
means for selectively applying the network access policy based on one or more predetermined criteria;
wherein the one or more predetermined criteria comprise a current data usage of the mobile device;
means for determining one or more parameters for each of the more than one RAT based on the network access policy; and
means for establishing communication with the RAT based on the one or more parameters and the network access policy.

14. The apparatus according to claim 13, comprising:
a processor; and
a memory in electronic communication with the processor, the memory embodying instructions, the instructions being executable by the processor to implement the means according to claim 13.

15. Computer program comprising computer-readable instructions to carry out a method according to any of claims 1-12, when executed by a computer.

## Patentansprüche

1. Ein Verfahren (700) zum Verwalten einer Netzwerkauswahl bei einer mobilen Vorrichtung, aufweisend:
Feststellen (705), dass mehr als eine Funkzugangstechnologie ("radio access technology"; RAT) zur drahtlosen Kommunikation mit der mobilen Vorrichtung zur Verfügung steht;
Zugreifen (710) auf eine Netzwerkzugangsregel, welche eine Verwendung einer RAT basierend auf einer oder mehreren Netzwerkcharakteristiken anzeigt;
selektives Anwenden (715) der Netzwerkzugangsregel basierend auf einem oder mehreren vorbestimmten Kriterien;
wobei die ein oder mehreren vorbestimmten Kriterien eine gegenwärtige Datennutzung der mobilen Vorrichtung aufweisen;
Feststellen (720) eines oder mehrerer Parameter für jede der mehr als einen RAT basierend auf der Netzwerkzugangsregel; und
Etablieren (725) einer Kommunikation mit der RAT basierend auf dem einen oder den mehreren Parametern und der Netzwerkzugangsregel.

2. Das Verfahren nach Anspruch 1, wobei das Feststellen des einen oder der mehreren Parameter aufweist:
Schätzen einer verfügbaren Bandbreite für eine oder mehrere RAT; und
Identifizieren der RAT mit der höchsten geschätzten verfügbaren Bandbreite.

3. Das Verfahren nach Anspruch 2, wobei das Schätzen der verfügbaren Bandbreite zumindest ein Schätzen einer verfügbaren Funkverbindungsbandbreite oder ein Feststellen einer Rücktransportbandbreite aufweist.

4. Das Verfahren nach Anspruch 3, wobei das Feststellen der Rücktransportbandbreite zumindest ein Empfangen der Rücktransportbandbreite in einer Nachricht von einem anderen Knoten oder ein Schätzen der Rücktransportbandbreite aufweist.

5. Das Verfahren nach Anspruch 3, wobei das Schätzen der verfügbaren Bandbreite ein Messen einer Verbindungskapazität bei der mobilen Vorrichtung und ein Empfangen oder Schätzen von Parametern mit Bezug auf eine Netzwerklast aufweist.

6. Das Verfahren nach Anspruch 1, wobei die ein oder mehreren vorbestimmten Kriterien ferner ein oder mehrere Elemente aus der folgenden Liste aufweisen:
eine gegenwärtige Tageszeit;
eine gegenwärtige Position der mobilen Vorrichtung;
einen Aufwand zum Zugriff auf eine der mehr als einen RAT;
einen Roamingstatus der mobilen Vorrichtung auf einer oder mehreren RAT;
ein Anmeldungsprofil ("subscription profile") der mobilen Vorrichtung; oder
eine Identität eines WLAN- oder Mobilfunkzugangsknotens.

7. Das Verfahren nach Anspruch 1, wobei die Netzwerkzugangsregel einen ersten bandbreitenbezogenen Parameterschwellwert für eine erste RAT und einen zweiten bandbreitenbezogenen Parameterschwellwert für eine zweite RAT aufweist.

8. Das Verfahren nach Anspruch 7, ferner aufweisend:
Feststellen, dass ein erster bandbreitenbezogener Parameter der ersten RAT den ersten bandbreitenbezogenen Parameterschwellwert erreicht;
Feststellen, dass ein zweiter bandbreitenbezogener Parameter der zweiten RAT den zweiten bandbreitenbezogenen Parameterschwellwert nicht erreicht; und
Etablieren einer Kommunikation mit dem ersten RAT.

9. Das Verfahren nach Anspruch 2, wobei das Schätzen der verfügbaren Bandbreite für jede RAT ferner ein Schätzen als eine Funktion von einem oder mehreren bandbreitenanzeigenden Parametern aufweist.

10. Das Verfahren nach Anspruch 9, wobei der eine oder die mehreren bandbreitenanzeigenden Parameter eines oder mehrere von einem Signal-zu-Rauschen-Verhältnis (SNR), einer Ressourcennutzung, einem Rauschanstieg, einer RAT-Belastung, einer Anzahl verfügbarer Codes, einem Schlitznutzungsfaktor, einer verfügbaren Übertragungsleistung, einer Anzahl verfügbarer Ressourcenblöcke oder einer Kapazität und Nutzung von Zugangsknotenrücktransport umfassen.

11. Das Verfahren nach Anspruch 1, wobei die Netzwerkzugangsregel ferner eine Auswahlbedingung aufweist und wobei das Etablieren der Kommunikation mit der RAT ferner auf der Auswahlbedingung basiert.

12. Das Verfahren nach Anspruch 11, wobei die Auswahlbedingung eine erste RAT-Auswahlbedingung zum Auswählen der RAT mit der höchsten geschätzten verfügbaren Bandbreite und eine zweite RAT-Auswahlbedingung zum Auswählen einer zweiten RAT aufweist.

13. Eine Vorrichtung zum Verwalten einer Netzwerkauswahl bei einer mobilen Vorrichtung, aufweisend:
Mittel zum Feststellen, dass mehr als eine Funkzugangstechnologie ("radio access technology"; RAT) zur drahtlosen Kommunikation mit der mobilen Vorrichtung zur Verfügung steht;
Mittel zum Zugreifen auf eine Netzwerkzugangsregel, welche eine Verwendung einer RAT basierend auf einer oder mehreren Netzwerkcharakteristiken anzeigt;
Mittel zum selektiven Anwenden der Netzwerkzugangsregel basierend auf einem oder mehreren vorbestimmten Kriterien;
wobei die ein oder mehreren vorbestimmten Kriterien eine gegenwärtige Datennutzung der mobilen Vorrichtung aufweisen;
Mittel zum Feststellen eines oder mehrerer Parameter für jede der mehr als einen RAT basierend auf der Netzwerkzugangsregel; und
Mittel zum Etablieren einer Kommunikation mit der RAT basierend auf dem einen oder den mehreren Parametern und der Netzwerkzugangsregel.

14. Die Vorrichtung nach Anspruch 13, aufweisend:
einen Prozessor; und
einen Speicher in elektronischer Kommunikation mit dem Prozessor, wobei der Speicher Instruktionen verkörpert, wobei die Instruktionen von dem Prozessor zum Implementieren der Mittel nach Anspruch 13 ausführbar sind.

15. Computerprogramm, aufweisend computerlesbare Instruktionen zum Ausführen eines Verfahrens gemäß irgendeinem der Ansprüche 1-12 bei Ausführung auf einem Computer.

## Revendications

1. Procédé (700) de gestion de sélection de réseau à un dispositif mobile, comprenant :
la détermination (705) que plusieurs technologies d'accès radio (RAT) sont disponibles pour une communication sans fil avec le dispositif mobile ;
l'accès (710) à une politique d'accès de réseau qui indique l'utilisation d'une RAT sur la base d'une ou plusieurs caractéristiques de réseau ;
l'application sélective (715) de la politique d'accès de réseau sur la base d'un ou plusieurs critères prédéterminés ;
dans lequel l'un ou plusieurs critères prédéterminés comprennent une utilisation de données actuelle du dispositif mobile ;
la détermination (720) d'un ou plusieurs paramètres pour chacune des plusieurs RAT sur la base de la politique d'accès de réseau ; et
l'établissement (725) d'une communication avec la RAT sur la base de l'un ou plusieurs paramètres et de la politique d'accès de réseau.

2. Procédé selon la revendication 1, dans lequel la détermination de l'un ou plusieurs paramètres comprend:
l'estimation d'une largeur de bande disponible pour une ou plusieurs RAT ; et
l'identification de la RAT ayant la plus grande largeur de bande disponible estimée.

3. Procédé selon la revendication 2, dans lequel l'estimation de la largeur de bande disponible comprend au moins l'une de l'estimation d'une largeur de bande de liaison radio disponible ou de la détermination d'une largeur de bande de liaison terrestre.

4. Procédé selon la revendication 3, dans lequel la détermination de la largeur de bande de liaison terrestre comprend au moins l'une de la réception de la largeur de bande de liaison terrestre dans un message provenant d'un autre noeud ou de l'estimation de la largeur de bande de liaison terrestre.

5. Procédé selon la revendication 3, dans lequel l'estimation de la largeur de bande disponible comprend la mesure d'une capacité de liaison au dispositif mobile et la réception ou l'estimation de paramètres relatifs à une charge de réseau.

6. Procédé selon la revendication 1, dans lequel l'un ou plusieurs critères prédéterminés comprennent en outre un ou plusieurs de:
une heure actuelle de la journée ;
un emplacement actuel du dispositif mobile;
un coût d'accès à l'une des plusieurs RAT;
un statut d'itinérance du dispositif mobile sur une ou plusieurs RAT;
un profil d'abonnement du dispositif mobile; ou
une identité d'un noeud WLAN ou d'accès cellulaire.

7. Procédé selon la revendication 1, dans lequel la politique d'accès de réseau comprend un premier seuil de paramètre relatif à la largeur de bande pour une première RAT et un deuxième seuil de paramètre relatif à la largeur de bande pour une deuxième RAT.

8. Procédé selon la revendication 7, comprenant en outre:
la détermination qu'un premier paramètre relatif à la largeur de bande de la première RAT respecte le premier seuil de paramètre relatif à la largeur de bande ;
la détermination qu'un deuxième paramètre relatif à la largeur de bande de la deuxième RAT ne respecte pas le deuxième seuil de paramètre relatif à la largeur de bande ; et
l'établissement d'une communication avec la première RAT.

9. Procédé selon la revendication 2, dans lequel l'estimation de la largeur de bande disponible pour chaque RAT comprend en outre l'estimation en fonction d'un ou plusieurs paramètres indicatifs de la largeur de bande.

10. Procédé selon la revendication 9, dans lequel l'un ou plusieurs paramètres indicatifs de la largeur de bande comprend un ou plusieurs d'un rapport de signal sur bruit, SNR, d'une utilisation de ressources, d'une augmentation de bruit, d'une charge de RAT, d'un nombre de codes disponibles, d'un facteur d'utilisation de créneau, d'une puissance d'émission disponible, d'un nombre de blocs de ressources disponibles, ou d'une capacité et d'une utilisation de liaison terrestre de noeud d'accès.

11. Procédé selon la revendication 1, dans lequel la politique d'accès de réseau comprend en outre une condition de sélection, et dans lequel l'établissement d'une communication avec la RAT est en outre basé sur la condition de sélection.

12. Procédé selon la revendication 11, dans lequel la condition de sélection comprend une première condition de sélection de RAT pour sélectionner la RAT ayant la plus grande largeur de bande disponible estimée et une deuxième condition de sélection de RAT pour sélectionner une deuxième RAT.

13. Appareil de gestion de sélection de réseau à un dispositif mobile, comprenant:
des moyens de détermination que plusieurs technologies d'accès radio (RAT) sont disponibles pour une communication sans fil avec le dispositif mobile ;
des moyens d'accès à une politique d'accès de réseau qui indique l'utilisation d'une RAT sur la base d'une ou plusieurs caractéristiques de réseau ;
des moyens d'application sélective de la politique d'accès de réseau sur la base d'un ou plusieurs critères prédéterminés ;
dans lequel l'un ou plusieurs critères prédéterminés comprennent une utilisation de données actuelle du dispositif mobile ;
des moyens de détermination d'un ou plusieurs paramètres pour chacune des plusieurs RAT sur la base de la politique d'accès de réseau ; et
des moyens d'établissement d'une communication avec la RAT sur la base de l'un ou plusieurs paramètres et de la politique d'accès de réseau.

14. Appareil selon la revendication 13, comprenant:
un processeur ; et
une mémoire en communication électronique avec le processeur, la mémoire comprenant des instructions, les instructions étant exécutables par le processeur pour mettre en oeuvre les moyens selon la revendication 13.

15. Programme informatique comprenant des instructions lisibles par ordinateur pour effectuer un procédé selon l'une quelconque des revendications 1 à 12 lorsqu'elles sont exécutées par un ordinateur.
